# EUROPEAN PATENT APPLICATION

(11) **EP 4 769 776 A1**
(43) Date of publication of application: **01.07.2026**
(21) Application number: 25848834.5
(22) Date of filing: 25.07.2025
(51) Int. Cl.: H01M 50/383, H01M 50/204, F16J 15/02

(54) **GASKET FOR SUPPRESSING FLAME RELEASE IN CASE OF THERMAL RUNAWAY AND BATTERY PACK HAVING SAME**

(30) Priority: 30.07.2024 KR 20240100999
(71) Applicant: LG Energy Solution, Ltd., Seoul 07335 (KR)
(72) Inventor: KIM, Kihoon, Daejeon 34122 (KR)
(74) Representative: Plasseraud IP
(86) International application number: PCT/KR2025/011069
(87) International publication number: WO 2026/029493

(57) **Abstract**

A gasket for suppressing flame release according to an embodiment of the present disclosure is a gasket disposed between an upper housing and a lower housing for sealing, including a first taper unit including an inner surface and an outer surface tapered outward, and a second taper unit including an inner surface and an outer surface tapered outward and connected to the outer side of the first taper unit. The gasket and a battery pack present leakage of gas and particles and suppress flame release in case of thermal runaway.

## Description

### [Technical Field]

The present disclosure relates to a gasket and a battery pack having the same, and more specifically, to a gasket capable of suppressing flame release to the outside during thermal runaway and a battery pack having the same.

### [Background Art]

Unlike primary batteries which cannot be rechargeable, secondary batteries are rechargeable and are used not only in portable devices but also in electric vehicles (EVs) and hybrid electric vehicles (HEVs) powered by electrical power sources.

Currently, widely used secondary batteries include lithium-ion batteries, lithium polymer batteries, nickel-cadmium batteries, nickel-hydride batteries, and nickel-zinc batteries. The operating voltage of such a unit secondary battery cell, that is, a unit battery cell, is approximately 2.5 V to 4.6 V. Therefore, if a higher output voltage is required, multiple battery cells are connected in series to form a battery pack. Furthermore, depending on the required charge/discharge capacity of a battery pack, multiple battery cells may be connected in parallel to form a battery pack. Therefore, the number of battery cells included in a battery pack can vary depending on the required output voltage or charge/discharge capacity.

When multiple battery cells are connected in series or parallel to form a battery pack, it is common to first construct a battery module composed of at least one battery cell, preferably multiple battery cells and then construct a battery pack using at least one battery module and additional components. Here, a battery module refers to a component in which multiple battery cells are connected in series or parallel, and a battery pack refers to a component in which multiple battery modules are connected in series or parallel to increase capacity and output power.

To maintain structural stability, a typical vehicle battery pack has multiple battery modules or battery module assemblies arranged on the same plane.

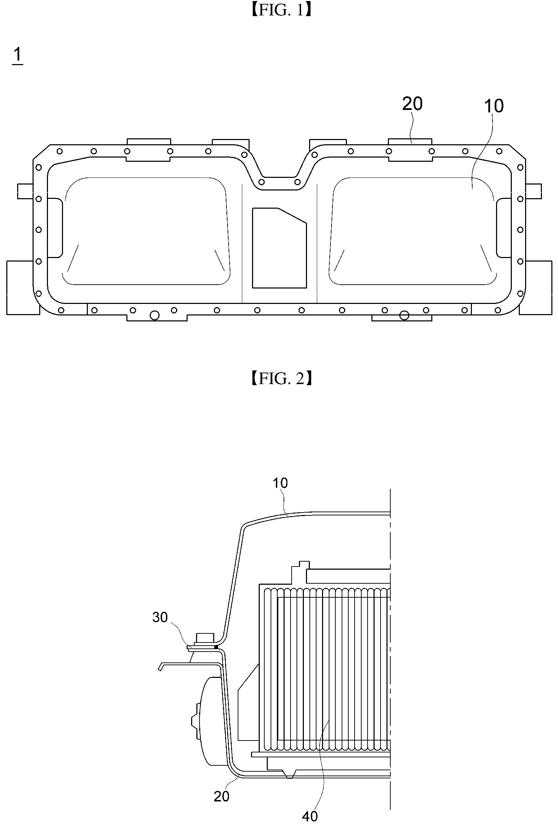

FIG. 1 to FIG. 3 illustrate a conventional battery pack 1. As shown, the battery pack 1 includes an upper housing 10, a lower housing 20, a gasket 30 between the upper housing 10 and the lower housing 20, and a battery module 40 positioned internally.

If overcharging occurs in this battery pack 1, high energy can flow instantaneously, and the chemical activation of the anode material is significantly enhanced due to overcharging or short-circuiting. This can rapidly react with the electrolyte, generating a large amount of gas and causing thermal runaway. This thermal runaway can damage the main gasket 30 due to flames and short-circuiting, potentially leading to a fire emanating from the battery pack.

### [Disclosure]

### [Technical Problem]

The present disclosure aims to overcome the limitations of prior art and an object of the present disclosure is to provide a gasket capable of suppressing flame release in case of thermal runaway, and a battery pack including the same.

### [Technical Solution]

A gasket for suppressing flame release according to an embodiment of the present disclosure is a gasket disposed between an upper housing and a lower housing for sealing, the gasket including a first taper unit including an inner surface and an outer surface tapered outward, and a second taper unit including an inner surface and an outer surface tapered outward and connected to the outer side of the first taper unit.

Furthermore, the inner surface of the first taper unit may be formed in a concave shape in the middle.

Furthermore, the outer surface of the first taper unit may include a first upper inclined surface sloping outward and downward toward the middle of the first taper unit, and a first lower inclined surface sloping outward toward the middle of the first taper unit.

Furthermore, the inner surface of the second taper unit may be formed in a concave shape in the middle.

Furthermore, the inner surface of the second taper unit may include an upper inner surface and a lower inner surface at a lower portion of the second taper unit, the upper inner surface may be formed in a concave shape from the top toward the middle of the second taper unit, and the lower inner surface may be formed in a concave shape from the bottom toward the middle of the second taper unit.

Furthermore, the outer surface of the second taper unit may include a second upper inclined surface sloping outward and downward toward the middle of the second taper unit, and a second lower inclined surface sloping outward toward the middle of the second taper unit.

Furthermore, the gasket may further include a third taper unit including an inner surface and an outer surface tapered outward and connected to the outer surface of the second taper unit.

Furthermore, the inner surface of the third taper unit may be formed in a concave shape in the middle.

Furthermore, the inner surface of the third taper unit may include an upper inner surface and a lower inner surface, the upper inner surface may be formed in a concave shape from the top toward the middle of the third taper unit, and the lower inner surface may be formed in a concave shape from the bottom toward the middle of the third tapered portion.

Furthermore, the outer surface of the third taper unit may include a third upper inclined surface sloping outward and downward toward the middle of the third taper unit, and a third lower inclined surface sloping outward toward the middle of the third taper unit.

A battery pack for suppressing flame release according to an embodiment of the present disclosure includes one or more battery modules, a case including an upper housing and a lower housing coupled to the upper housing to accommodate the battery modules, and a gasket disposed between the upper housing and the lower housing, wherein the gasket includes a first taper unit including an inner surface and an outer surface tapered outward, and a second taper unit including an inner surface and an outer surface tapered outward and connected to the outer side of the first taper unit.

A battery pack for suppressing flame release according to another embodiment of the present disclosure includes a plurality of battery cells, a case including an upper housing and a lower housing coupled to the upper housing to accommodate the battery cells, and a gasket disposed between the upper housing and the lower housing, wherein the gasket includes a first taper unit including an inner surface and an outer surface tapered outward, and a second taper unit including an inner surface and an outer surface tapered outward and connected to the outer side of the first taper unit.

### [Effects of the Invention]

The gasket and battery pack according to the present disclosure have the effect of preventing leakage of gas and particles and suppressing frame release in case of thermal runaway.

### [Description of Drawings]

FIG. 1 is a diagram illustrating a conventional battery pack.
FIG. 2 is a cross-sectional view of one side of the battery pack of FIG. 1.
FIG. 3 is a detailed view of a portion where an upper housing and a lower housing are joined in FIG. 2.
FIG. 4 is a cross-sectional view of one side of a battery pack according to an embodiment of the present disclosure.
FIG. 5 is a longitudinal cross-sectional view of a gasket according to an embodiment of the present disclosure.
FIG. 6 is a partial perspective view of the gasket according to an embodiment of the present disclosure.
FIG. 7 is a diagram illustrating how the gasket prevents leakage of gas and particles according to an embodiment of the present disclosure.
FIG. 8 is a cross-sectional view of a gasket according to another embodiment of the present disclosure.

### [Mode for Carrying out the Invention]

The advantages and features of the present disclosure, and the methods for achieving the same will become clear with reference to the embodiments described below in conjunction with the accompanying drawings. However, the present disclosure is not limited to the embodiments disclosed below, but may rather be implemented in various different forms, and these embodiments are provided only to make the present disclosure complete and to fully inform those skilled in the art of the scope of the disclosure, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness may be enlarged to clearly express various layers and regions. Like reference numerals are used for similar parts throughout the specification. When a part, such as a layer, a film, a region, or a plate, is said to be "on" another part, this includes not only cases where it is "directly on" the other part, but also cases where there is another part in between. Conversely, when a part is said to be "directly on" another part, it means that there is no other part in between. Further, when a part, such as a layer, a film, a region, or a plate, is said to be "beneath" another part, this includes not only cases where it is "directly beneath" the other part, but also cases where there are other parts in between. Conversely, when a part is said to be "directly beneath" another part, it means that there are no other parts in between.

Hereinafter, a gasket for preventing flame leakage during thermal runaway and a battery pack including the same according to a preferred embodiment of the present disclosure will be described in detail with reference to the attached drawings.

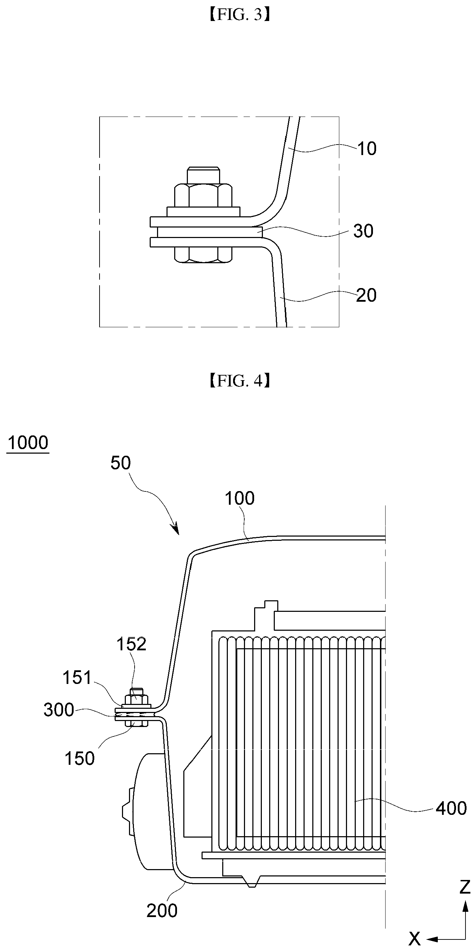

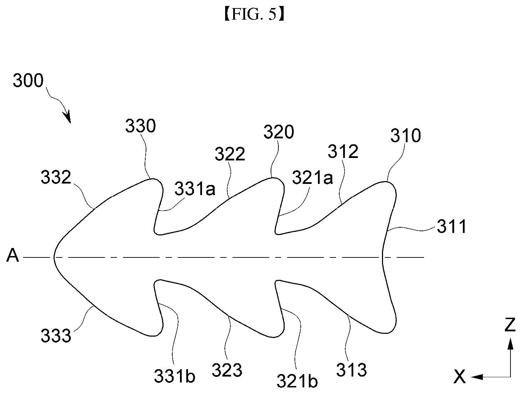

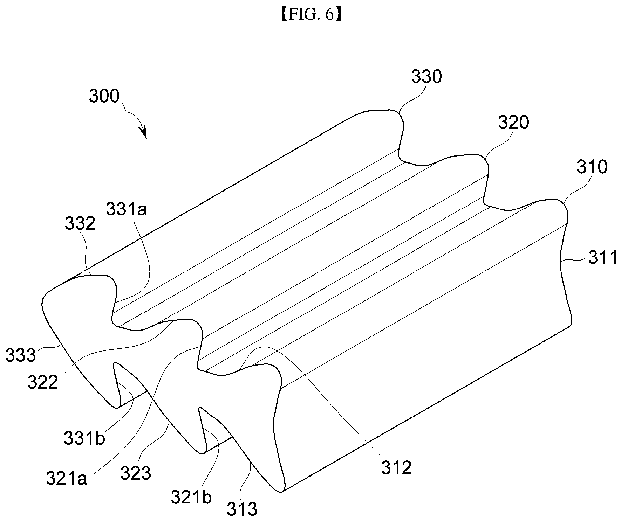

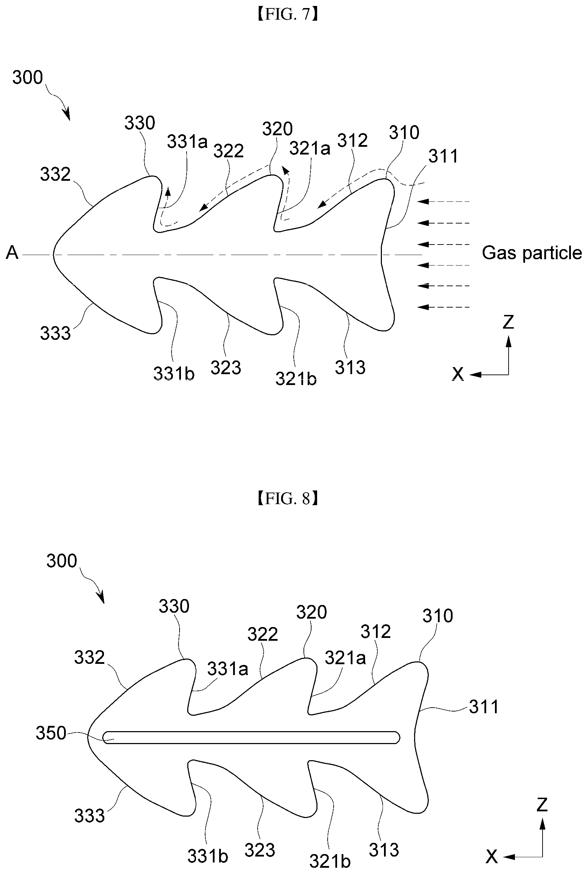

FIG. 4 is a cross-sectional view of one side of a battery pack according to an embodiment of the present disclosure, FIG. 5 is a longitudinal cross-sectional view of a gasket according to an embodiment of the present disclosure, FIG. 6 is a perspective view of a portion of the gasket according to an embodiment of the present disclosure, FIG. 7 is a diagram illustrating how the gasket according to an embodiment of the present disclosure prevents leakage of gas and particles, and FIG. 8 is a longitudinal cross-sectional view of a gasket according to another embodiment of the present disclosure.

A gasket 300 according to an embodiment of the present disclosure may be positioned between an upper housing 100 and a lower housing 200 for sealing.

In addition, a battery pack 1000 for suppressing flame leakage during thermal runaway according to an embodiment of the present disclosure includes one or more battery modules 400, a case 50 for accommodating the battery modules 400, and the gasket 300, and the case 50 may include the upper housing 100 and the lower housing 200.

Hereinafter, an example in which the gasket 300 according to the present disclosure is applied to the battery pack 1000 will be described.

The battery module 400 accommodated in the battery pack 1000 includes a plurality of battery cells (not shown), and each of the battery cells may be, for example, a pouch-type battery cell.

For example, the battery module 400 may include a plurality of battery cells which are stacked, and each battery cell may have electrode leads at both the front and rear ends. A positive lead is provided at the front end of each battery cell, and a negative lead is provided at the rear end thereof. The multiple battery cells within the battery module 400 may be stacked such that they can be electrically connected to each other.

The battery cells are not limited to pouch-type battery cells and may be other battery cells in different shapes, such as cylindrical and rectangular cells, and the multiple battery cells may be housed within the case of the battery module 400.

Although an example in which a plurality of battery modules 400 are housed within the battery pack 1000 is illustrated in the embodiment of the present disclosure, a plurality of battery cells may be directly disposed within the battery pack 1000.

The case 50 is designed to accommodate the plurality of battery modules 400 or a plurality of battery cells, and may include the upper housing 100 and the lower housing 200.

The lower housing 200 may accommodate the plurality of battery modules 400 or the plurality of battery cells, and the upper housing 100 is coupled to the upper side of the lower housing 200, forming an internal space within the case 50 in which the battery modules 400 are accommodated.

The gasket 300 positioned between the upper housing 100 and the lower housing 200 may be used to seal the upper and lower housings 100 and 200. The gasket 300 may be disposed over the entire area where the upper and lower housings 100 and 200 are joined and may be formed in a closed loop shape on a flat surface. Furthermore, the gasket 300 may have through holes positioned in the longitudinal direction, into which bolts, etc. for fastening the upper and lower housings 100 and 200 are inserted.

In the present embodiment, the gasket 300 may be formed by sequentially connecting a first taper unit 310, a second taper unit 320, and a third taper unit 330, as illustrated in FIG. 5 to FIG. 7.

The first taper unit 310 may be positioned at the innermost side of the gasket 300 (in the inward direction of the battery pack 1000) and may have an inner surface 311 facing the inside of the battery pack 1000 and an outer surface 312 and 313 facing the outside of the battery pack 1000.

The inner surface 311 of the first taper unit 310 may have a concave shape in the middle, as shown.

The outer surface 312 and 313 of the first taper unit 310 may have a shape that tapers outward (in the X-axis direction). The outer surface 312 and 313 may include a first upper inclined surface 312 at the upper portion and a first lower inclined surface 313 at the lower portion.

The first upper inclined surface 312 may be formed to slope outward and downward toward the middle A of the gasket 300 (the first taper unit 310), and the first lower inclined surface 313 may be formed to slope outward toward the middle A of the gasket 300 (the first taper unit 310).

Therefore, the gap between the first upper inclined surface 312 and the first lower inclined surface 313 may gradually decrease toward the outside.

The second taper unit 320 may be positioned on the outside of the first taper unit 310 of the gasket 300 (in the outward direction of the battery pack 1000) and disposed between the first taper unit 310 and the third taper unit 330.

The second taper unit 320 may have an inner surface 321a and 321b facing the inside of the battery pack 1000 and an outer surface 322 and 323 facing the outside of the battery pack 1000.

As illustrated, the inner surface 321a and 321b of the second taper unit 320 may be formed in a concave shape in the middle. The inner surface 321a and 321b may include an upper inner surface 321a positioned on the upper side of the inner surface 321a and 321b and a lower inner surfaces 321b positioned on the lower side of the inner surface 321a and 321b, the upper inner surface 321a may become more concave toward the middle A of the second taper unit 320 from the upper end of the upper inner surface 321a, and the lower inner surface 321b may become more concave toward the middle A of the second taper unit 320 from the lower end of the lower inner surface 321b. The lower end of the upper inner surface 321a may be connected to the first upper inclined surface 312 of the first taper unit 310, and the upper end of the lower inner surface 321b may be connected to the first lower inclined surface 313 of the first taper unit 310.

The outer surface 322 and 323 of the second taper unit 320 may have a shape that tapers outward (in the X-axis direction). The outer surface 322 and 323 of the second taper unit 320 may include a second upper inclined surface 322 and a second lower inclined surface 323.

The second upper inclined surface 322 may be formed to slope outward and downward toward the middle A of the gasket 300 (the second taper unit 320), and the second lower inclined surface 323 may be formed to slope outward toward the middle A of the gasket 300 (the second taper unit 320).

Accordingly, the gap between the second upper inclined surface 322 and the second lower inclined surface 323 may gradually decrease toward the outside.

The third taper unit 330 may be positioned on the outside of the second taper unit 320 (in the outward direction of the battery pack 1000) and may be disposed at the outermost side of the gasket 300.

The third taper unit 330 may have an inner surface 331a and 331b facing the inside of the battery pack 1000 and an outer surface 332 and 333 facing the outside of the battery pack 1000.

As illustrated, the inner surface 331a and 331b of the third taper unit 330 may be formed in a concave shape in the middle. The inner surface 331a and 331b may include an upper inner surface 331a positioned on the upper side and a lower inner surface 331b positioned on the lower side, the upper inner surface 321a may become more concave toward the middle A of the third taper unit 330 from the upper end of the upper inner surface 321a, and the lower inner surface 321b may become more concave toward the middle A of the third taper unit 330 from the lower end of the lower inner surface 321b. The lower end of the upper inner surface 331a may be connected to the second upper inclined surface 322 of the second taper unit 320, and the upper end of the lower inner surface 331b may be connected to the second lower inclined surface 323 of the second taper unit 320.

The outer surface 332 and 333 of the third taper unit 330 may have a shape that tapers outward (in the X-axis direction). The outer surface 332 and 333 of the third taper unit 330 may include a third upper inclined surface 332 on the upper side and a third lower inclined surface 333 on the lower side.

The third upper inclined surface 332 may be formed to slope outward and downward toward the middle A of the gasket 300 (the third taper unit 330), and the third lower inclined surface 333 may be formed to slope outward toward the middle A of the gasket 300 (the third taper unit 330).

Accordingly, the gap between the third upper inclined surface 332 and the third lower inclined surface 333 may gradually decrease toward the outside.

The third upper inclined surface 332 and the third lower inclined surface 333 of the third taper unit 330 may be connected to each other. As illustrated, the lower end of the third upper inclined surface 332 may meet and be connected to the upper end of the third lower inclined surface 333 at the midpoint of the outer surface 332 and 333 of the third taper unit 330.

In this way, in the present embodiment, the gasket 300 may be formed in a structure in which the first taper unit 310, the second taper unit 320, and the third taper unit 330 are sequentially connected from the inside to the outside of the battery pack 1000 (X-axis direction in the drawing).

The first taper unit 310, the second taper unit 320, and the third taper unit 330 may be formed in a vertically symmetrical structure based on the middle A.

The gasket 300 may be formed by sequentially connecting multiple taper units as described above. Although an example in which three taper units are connected is illustrated in the present embodiment, the gasket may be formed by connecting two taper units.

The gasket 300 may be made of rubber, synthetic resin such as urethane, metal, or other materials.

The gasket 300 having the structure described above is positioned between the upper housing 100 and the lower housing 200 and is joined to the upper and lower housings 100 and 200 using a bolt 150, a washer 151, and a nut 152.

If gas and particles are generated within the battery pack 1000 due to ignition or other causes, the internal pressure within the pack increases, and this increased pressure may create a gap between the upper housing and the lower housing, allowing the gas and particles to release to the outside.

In the present embodiment, the gasket 300 having the configuration described above is disposed between the upper housing 100 and the lower housing 200 to form a structure that makes it difficult for gas and particles inside the battery pack 1000 to escape, thereby suppressing flame leakage.

Specifically, as illustrated in FIG. 7, when gas and particles inside the battery pack 1000 move to the first taper unit 310 of the gasket 300, they come into contact with the inner surface 311 of the first taper unit 310 and move along the inner surface 311. Since the inner surface 311 is formed in a concave shape, the gas and particles move along the upper or lower portion of the inner surface 311 and move inward rather than outward in the pack 1000. The upper portion of the inner surface 311 is in contact with the upper housing 100 and the lower portion of the inner surface 311 is in contact with the lower housing 200, making it difficult for the gas and particles to release to the outside.

In addition, even when the gas and particles exit the first taper unit 310, they pass through the first upper inclined surface 312 and the first lower inclined surface 313 and meet the upper and lower inner surfaces 321a and 321b of the second taper unit 320, and since the upper and lower inner surfaces 321a and 321b are formed in a concave shape, the gas and particles move inward rather than outward in the pack 1000 while moving along the upper and lower inner surfaces 321a and 321b, and the upper portion of the upper inner surface 321a is in contact with the upper housing 100 and the lower portion of the lower inner surface 321b is in contact with the lower housing 200, making it difficult for the gas and particles to release to the outside.

Further, even when the gas and particles pass through the second taper unit 320, they pass through the second upper inclined surface 322 and the second lower inclined surface 323 and meet the upper and lower inner surfaces 331a and 331b of the third taper unit 330, and since the upper and lower inner surfaces 331a and 331b are formed in a concave shape, the gas and particles move inward rather than outward in the pack 1000 while moving along the upper and lower inner surfaces 331a and 331b, and the upper portion of the upper inner surface 331a is in contact with the upper housing 100 and the lower portion of the lower inner surface 331b is in contact with the lower housing 200, making it difficult for the gas and particles to release to the outside.

FIG. 8 is a longitudinal cross-sectional view of a gasket 300 according to another embodiment of the present disclosure. The gasket 300 according to another embodiment of the present disclosure may include a reinforcing member 350 positioned in the middle of the gasket 300.

The reinforcing member 350 may be made of a different material from the gasket 300 and may be positioned within the gasket 300 to reinforce the rigidity of the gasket 300. For example, the body of the gasket 300 may be made of rubber or a synthetic resin such as urethane, and the reinforcing member 350 may be made of a metal such as steel, but the present disclosure is not limited thereto. Examples of the material of the reinforcing member 350 may include carbon fiber, fiber-reinforced plastic, carbon fiber-reinforced plastic, and the like.

In the present embodiment, the reinforcing member 350 may be formed to extend from the inside to the outside (X-axis direction) along the center line A of the gasket 300, for example, and may be formed in such a manner that the gasket body wraps around the reinforcing member 350. As another example, the gasket body may not wrap around the reinforcing member 350, and the gasket body may be divided into upper and lower parts based on the reinforcing member 350. The reinforcing member 350 may be formed from the first taper unit 310 through the second taper unit 320 to the inside of the third taper unit 330. The reinforcing member 350 may extend in the longitudinal direction of the gasket 300, and the width of the reinforcing member 350 (in the X-axis direction) may be at least half the width of the gasket 300.

In addition, as another example, the reinforcing member 350 may be provided only in one of the first to third taper units 310, 320, and 330. For example, the reinforcing member 350 may be provided only in the second taper unit 320, and the cross-section of the reinforcing member 350 may be circular, square, polygonal, or the like.

In this manner, the gasket 300 may be made of dual materials or triple materials.

While the present disclosure has been described with reference to preferred embodiments as described above, the present disclosure is not limited to the above-described embodiments, and various modifications and variations are possible by those skilled in the art without departing from the spirit of the disclosure.

### [Industrial Applicability]

The present disclosure provides a gasket capable of suppressing flame release to the outside in case of thermal runaway, and a battery pack including the same.

## Claims

1. A gasket disposed between an upper housing and a lower housing for sealing and suppressing flame release, the gasket comprising:
a first taper unit including an inner surface and an outer surface tapered outward; and
a second taper unit including an inner surface and an outer surface tapered outward and connected to the outer side of the first taper unit.

2. The gasket of claim 1, wherein the inner surface of the first taper unit is formed in a concave shape in the middle.

3. The gasket of claim 1, wherein the outer surface of the first taper unit includes a first upper inclined surface sloping outward and downward toward the middle of the first taper unit, and a first lower inclined surface sloping outward toward the middle of the first taper unit.

4. The gasket of claim 1, wherein the inner surface of the second taper unit is formed in a concave shape in the middle.

5. The gasket of claim 4, wherein the inner surface of the second taper unit includes an upper inner surface and a lower inner surface at a lower portion of the second taper unit,
wherein the upper inner surface is formed in a concave shape from the top toward the middle of the second taper unit, and the lower inner surface is formed in a concave shape from the bottom toward the middle of the second taper unit.

6. The gasket of claim 1, wherein the outer surface of the second taper unit includes a second upper inclined surface sloping outward and downward toward the middle of the second taper unit, and a second lower inclined surface sloping outward toward the middle of the second taper unit.

7. The gasket of claim 1, further comprising a third taper unit including an inner surface and an outer surface tapered outward and connected to the outer surface of the second taper unit.

8. The gasket of claim 7, wherein the inner surface of the third taper unit is formed in a concave shape in the middle.

9. The gasket of claim 8, wherein the inner surface of the third taper unit includes an upper inner surface and a lower inner surface,
wherein the upper inner surface is formed in a concave shape from the top toward the middle of the third taper unit, and the lower inner surface is formed in a concave shape from the bottom toward the middle of the third tapered portion.

10. The gasket of claim 7, wherein the outer surface of the third taper unit includes a third upper inclined surface sloping outward and downward toward the middle of the third taper unit, and a third lower inclined surface sloping outward toward the middle of the third taper unit.

11. The gasket of claim 1, further comprising a reinforcing member made of a different material and provided in the middle of the gasket.

12. A battery pack for suppressing flame release, the battery pack comprising:
one or more battery modules;
a case including an upper housing and a lower housing coupled to the upper housing to accommodate the battery modules; and
a gasket disposed between the upper housing and the lower housing,
wherein the gasket comprises:
a first taper unit including an inner surface and an outer surface tapered outward; and
a second taper unit including an inner surface and an outer surface tapered outward and connected to the outer side of the first taper unit.

13. The battery pack of claim 12, wherein the inner surface of the first taper unit is formed in a concave shape in the middle.

14. The battery pack of claim 12, wherein the outer surface of the first taper unit includes a first upper inclined surface sloping outward and downward toward the middle of the first taper unit, and a first lower inclined surface sloping outward toward the middle of the first taper unit.

15. The battery pack of claim 12, wherein the inner surface of the second taper unit includes an upper inner surface and a lower inner surface,
wherein the upper inner surface is formed in a concave shape from the top toward the middle of the second taper unit, and the lower inner surface is formed in a concave shape from the bottom toward the middle of the second taper unit.

16. The battery pack of claim 12, wherein the outer surface of the second taper unit includes a second upper inclined surface sloping outward and downward toward the middle of the second taper unit, and a second lower inclined surface sloping outward toward the middle of the second taper unit.

17. The battery pack of claim 12, further comprising a third taper unit including an inner surface and an outer surface tapered outward, and connected to the outer side of the second taper unit.

18. The battery pack of claim 17, wherein the inner surface of the third taper unit includes an upper inner surface and a lower inner surface,
wherein the upper inner surface is formed in a concave shape from the top toward the middle of the third taper unit, and the lower inner surface is formed in a concave shape from the bottom toward the middle of the third tapered portion.

19. The battery pack of claim 17, wherein the outer surface of the third taper unit includes a third upper inclined surface sloping outward and downward toward the middle of the third taper unit, and a third lower inclined surface sloping outward toward the middle of the third taper unit.

20. The battery pack of claim 12, further comprising a reinforcing member made of a different material and provided in the middle of the gasket.
